# EUROPEAN PATENT APPLICATION

(11) **EP 4 852 126 A1**
(43) Date of publication of application: **09.12.2026**
(21) Application number: 25922943.3
(22) Date of filing: 02.12.2025
(51) Int. Cl.: H01M 10/058, H01M 10/04, H01M 10/0585, H01M 10/052, B29C 45/26

(54) **MOLD FOR MANUFACTURING SECONDARY BATTERY AND METHOD FOR MANUFACTURING ALL-SOLID-STATE SECONDARY BATTERY BY USING SAME**

(30) Priority: 03.02.2025 KR 20250013431
(71) Applicant: LG Energy Solution, Ltd., Seoul 07335 (KR)
(72) Inventor: KIM, Min Seong, Daejeon 34122 (KR)
(74) Representative: BCKIP Part mbB
(86) International application number: PCT/KR2025/020459
(87) International publication number: WO 2026/164357

(57) **Abstract**

Disclosed are a mold for manufacturing secondary batteries, the mold including a first mold including a first side wall portion configured to surround a first receiving space formed by a central portion thereof being recessed inward, a first step portion formed so as to be recessed inward by a predetermined depth from one surface of a 1a side wall member provided on each of both sides of the first side wall portion in an overall length direction, and at least one injection hole, and a second mold including a second side wall portion configured to surround a second receiving space formed by a central portion thereof being recessed inward, a second step portion formed so as to be recessed inward by a predetermined depth from one surface of a 2a side wall member provided on each of both sides of the second side wall portion in the overall length direction, and at least one exhaust hole, and an all-solid-state secondary battery manufacturing method using the same.

## Description

### [Technical Field]

This application claims the benefit of priority to Korean Patent Application No. 10-2025-0013431 filed on February 3, 2025, the disclosure of which is incorporated herein by reference in its entirety.

The present invention relates to a mold for manufacturing secondary batteries and an all-solid-state secondary battery manufacturing method using the same, and more particularly to a mold for manufacturing secondary batteries configured to mold an outer circumferential surface of a unit cell with a molding material and an all-solid-state secondary battery manufacturing method using the same.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Currently commercially available lithium-ion batteries use a liquid electrolyte and have a structure in which a negative electrode and a positive electrode are separated by a separator. Therefore, if the separator is damaged due to deformation or external impact, a short circuit may occur, leading to risks such as overheating or explosion.

Therefore, all-solid-state batteries using a solid electrolyte instead of the liquid electrolyte have been proposed. All-solid-state batteries have higher safety than lithium-ion batteries using the liquid electrolyte, and preventing electrolyte leakage improves battery reliability.

However, all-solid-state batteries using the solid electrolyte have problems such that the solid electrolyte has lower ionic conductivity than the liquid electrolyte, exhibit degraded output characteristics especially at low temperatures, exhibit difficulty in forming a uniform contact interface between an electrode and a solid electrolyte membrane compared to the liquid electrolyte, and has poor contact with an electrode active material, leading to increased resistance.

In order to solve the above problems, an isostatic pressing process is generally performed to achieve interface bonding between the electrode and the solid electrolyte.

In general, a process of manufacturing an all-solid-state battery is highly complex in that each unit cell formed by sequentially stacking a negative electrode, a solid electrolyte membrane, and a positive electrode is prepackaged using an aluminum pouch, etc., undergoes an isostatic pressing process, and is unpackaged to determine whether the unit cell is defective. Only unit cells determined to be good are selected and stacked again, and finally undergo main packaging.

Particularly during the isostatic pressing process, in which the unit cell is pressed under extremely high pressure, defects such as breakage or bending of the edge of the positive electrode or the negative electrode may occur due to space generated by the difference in width or length between the negative electrode and the positive electrode, stacking errors, etc., whereby the unit cell defect rate is high during the isostatic pressing process.

### (Prior Art Document)

(Patent Document 1) Korean Patent Application Publication No. 10-2024-0052314

### [Disclosure]

### [Technical Problem]

The present invention has been made in view of the above problems, and it is an object of the present invention to provide a mold for manufacturing secondary batteries capable of reducing the defect rate of unit cells during an isostatic pressing process and an all-solid-state secondary battery manufacturing method using the same.

It is another object of the present invention to provide a mold for manufacturing secondary batteries capable of further simplifying an all-solid-state secondary battery manufacturing method and an all-solid-state secondary battery manufacturing method using the same.

### [Technical Solution]

As a technical means for achieving the above objects, a mold for manufacturing secondary batteries according to an embodiment of the present invention includes a first mold (110) including a first side wall portion (111) configured to surround a first receiving space (S1) formed by an inwardly recessed central portion of the first mold, a first step portion (112) recessed inward by a predetermined depth from one surface of a 1a side wall member (111a) provided on each of both sides of the first side wall portion (111) in an overall length direction, and at least one injection hole (113), and a second mold (120) including a second side wall portion (121) configured to surround a second receiving space (S2) formed by an inwardly recessed central portion of the second mold, a second step portion (122) formed so as to be recessed inward by a predetermined depth from one surface of a 2a side wall member (121a) provided on each of both sides of the second side wall portion (121) in the overall length direction, and at least one exhaust hole (123).

Also, in the mold for manufacturing secondary batteries according to the embodiment of the present invention, the first step portion (112) may extend from the first receiving space (S1), and may have a depression depth less than the depression depth of the first receiving space (S1).

Also, in the mold for manufacturing secondary batteries according to the embodiment of the present invention, the first step portion (112) may have a length less than the length of the first receiving space (S1) in an overall width direction.

Also, in the mold for manufacturing secondary batteries according to the embodiment of the present invention, the second step portion (122) may extend from the second receiving space (S2), and may have a depression depth less than the depression depth of the second receiving space (S2).

Also, in the mold for manufacturing secondary batteries according to the embodiment of the present invention, the second step portion (122) may have a length less than the length of the second receiving space (S2) in the overall width direction.

Also, in the mold for manufacturing secondary batteries according to the embodiment of the present invention, the mold may further include a plurality of injection holes (113) and a plurality of exhaust holes (123).

In addition, an all-solid-state secondary battery manufacturing method using the mold for manufacturing secondary batteries according to the embodiment of the present invention includes (S1) receiving at least one unit cell (10) in the first receiving space (S1), (S2) seating the second mold (120) on the first mold (110), (S3) injecting a first molding material (210) in a liquid state through the injection hole (113), and (S4) thermally curing the first molding material (210).

Also, in the all-solid-state secondary battery manufacturing method according to the embodiment of the present invention, in step (S3), the first molding material (210) may be injected into a receiving space (S) at a predetermined pressure through a plurality of injection holes (113).

Also, the all-solid-state secondary battery manufacturing method according to the embodiment of the present invention may further include placing a second molding material (220) in a semi-cured state in the first receiving space prior to step (S1).

Also, in the all-solid-state secondary battery manufacturing method according to the embodiment of the present invention, the second molding material may be a semi-cured particle.

Also, in the all-solid-state secondary battery manufacturing method according to the embodiment of the present invention, the particle may be spherical.

Also, in the all-solid-state secondary battery manufacturing method according to the embodiment of the present invention, the second molding material (220) may include a lattice frame having a plurality of intersections, and the particle may be disposed at each of the plurality of intersections.

Also, in the all-solid-state secondary battery manufacturing method according to the embodiment of the present invention, each of the first molding material (210) and the second molding material (220) may be a thermosetting resin.

Also, in the all-solid-state secondary battery manufacturing method according to the embodiment of the present invention, in step (S1), a plurality of stacked unit cells (10) may be received.

Also, the all-solid-state secondary battery manufacturing method according to the embodiment of the present invention may further include isostatically pressing an all-solid-state secondary battery molded by the first molding material (210) after step (S4).

### [Advantageous Effects]

As is apparent from the above description, in a mold for manufacturing secondary batteries according to the present invention and an all-solid-state secondary battery manufacturing method using the same, a molding material is injected through an injection hole of a mold having a unit cell received therein such that all spaces, including an outer surface of the unit cell, are filled with the molding material, and therefore it is possible to uniformly press the unit cell during an isostatic pressing process, which contributes to a reduction in the defect rate caused by bending or damage.

Furthermore, in the mold for manufacturing secondary batteries according to the present invention and the all-solid-state secondary battery manufacturing method using the same, the molding material wraps around the entire outer surface of the unit cell such that a part of a tab portion of the unit cell is exposed to the outside, thereby it is possible to prevent moisture from penetrating from the outside.

Furthermore, in the mold for manufacturing secondary batteries according to the present invention and the all-solid-state secondary battery manufacturing method using the same, unpackaging and main packaging steps may be omitted, reducing manufacturing time and costs.

### [Description of Drawings]

FIG. 1 is an exploded perspective view illustrating a mold for manufacturing secondary batteries according to the present invention.
FIG. 2 is a perspective view illustrating a first mold constituting the mold for manufacturing secondary batteries according to the present invention.
FIG. 3 is a perspective view illustrating a second mold constituting the mold for manufacturing secondary batteries according to the present invention.
FIG. 4 is a sectional view illustrating the mold for manufacturing secondary batteries according to the present invention.
FIG. 5 is a perspective view illustrating an all-solid-state secondary battery manufactured by an all-solid-state secondary battery manufacturing method according to the present invention.
FIG. 6 is a sectional view taken along line A-A of FIG. 5.
FIG. 7 is a sectional view illustrating the state in which a unit cell is received in a receiving space of the mold for manufacturing secondary batteries as an all-solid-state secondary battery manufacturing method according to a first embodiment of the present invention.
FIG. 8 is a sectional view illustrating that a first molding material is injected into the receiving space through an injection hole of the mold for manufacturing secondary batteries shown in FIG. 7.
FIG. 9 is a plan view illustrating the state in which a second molding material is placed on the first mold constituting the mold for manufacturing secondary batteries, when viewed from above, as an all-solid-state secondary battery manufacturing method according to a second embodiment of the present invention.
FIG. 10 is a sectional view illustrating the state in which the second molding material and a unit cell are received as the all-solid-state secondary battery manufacturing method according to the second embodiment of the present invention.
FIG. 11 is a sectional view illustrating that a first molding material is injected into the receiving space through the injection hole of the mold for manufacturing secondary batteries shown in FIG. 10.
FIG. 12 is a plan view illustrating the state in which a second molding material is placed on the first mold constituting the mold for manufacturing secondary batteries, when viewed from above, as an all-solid-state secondary battery manufacturing method according to a third embodiment of the present invention.
FIG. 13 is a sectional view illustrating the state in which the second molding material and a unit cell are received as the all-solid-state secondary battery manufacturing method according to the third embodiment of the present invention.
FIG. 14 is a sectional view illustrating that a first molding material is injected into the receiving space through the injection hole of the mold for manufacturing secondary batteries shown in FIG. 13.
FIG. 15 is a perspective view illustrating a sealing material configured to wrap around a part of a tab portion seated on a 1b step portion of the mold for manufacturing secondary batteries according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a predetermined element is included does not mean that other elements are excluded, but means that such elements may be further included unless mentioned otherwise.

Hereinafter, a mold for manufacturing secondary batteries according to the present invention and an all-solid-state secondary battery manufacturing method using the same will be described.

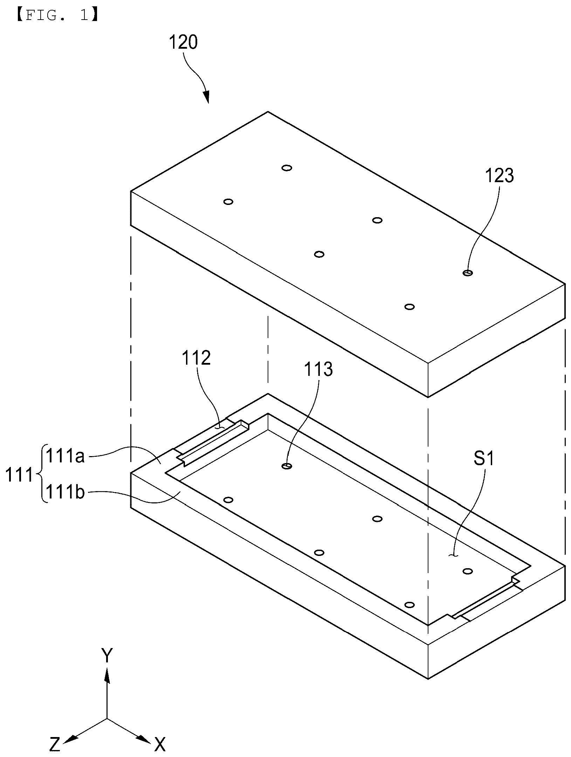

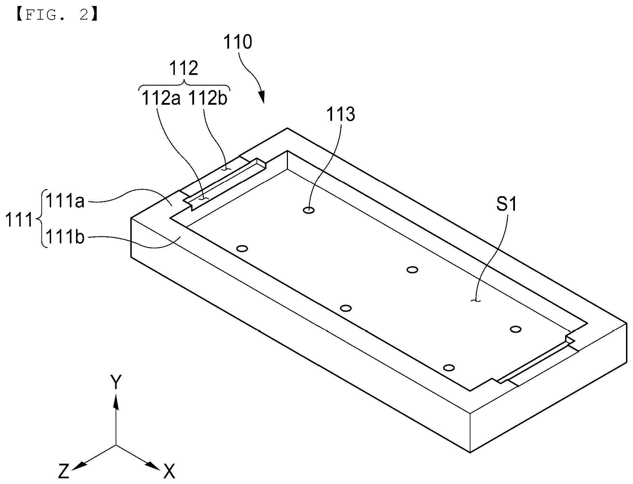

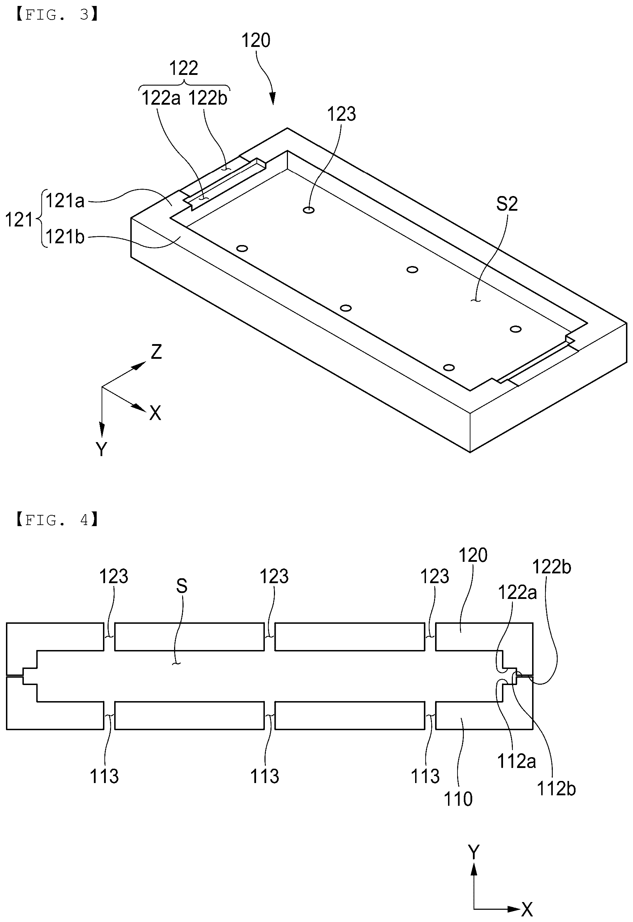

FIG. 1 is an exploded perspective view illustrating a mold for manufacturing secondary batteries according to the present invention, and FIG. 2 is a perspective view illustrating a first mold constituting the mold for manufacturing secondary batteries according to the present invention. In addition, FIG. 3 is a perspective view illustrating a second mold constituting the mold for manufacturing secondary batteries according to the present invention, and FIG. 4 is a sectional view illustrating the mold for manufacturing secondary batteries according to the present invention.

Referring to FIGs. 1 to 4, the mold 100 for manufacturing secondary batteries according to the present invention includes a first mold 110 and a second mold 120.

First, the first mold 110 may include a first receiving space S1 configured to receive at least one unit cell 10, a first side wall portion 111, a first step portion 112, and at least one injection hole 113.

The first receiving space S1 may be a space portion formed by a central portion of the first mold 110 being recessed inward (in a 6 o'clock direction in FIG. 2). In this case, the first receiving space S1 may have a depression depth corresponding to at least half the height of the unit cell 10 such that the at least one unit cell 10 can be received in the first receiving space. For example, the first receiving space S1 may be recessed so as to have a depth equal to or greater than the height of a tab portion 11 from a lower surface of the unit cell 10.

The first side wall portion 111 may include a pair of 1a side wall members 111a provided on both sides of the unit cell 10 received in the first receiving space S1 in an overall length direction (X-axis direction in FIG. 2) and a pair of 1b side wall members 111b provided on both sides of the unit cell 10 in an overall width direction (Z-axis direction in FIG. 2), and may surround the first receiving space S1.

In this case, the first step portion 112 may be recessed inward from one surface of the 1a side wall member 111a by a predetermined depth. The first step portion 112 may extend from the first receiving space S1 so as to allow the tab portion 11 of the unit cell 10 received in the first receiving space S1 to be received therein.

In addition, the first step portion 112 may be configured to allow the tab portion 11 of the unit cell 10 received in the first receiving space S1 to be received therein. In this case, the first step portion 112 may be a space for molding the tab portion 11 such that a part of the tab portion 11 is wrapped by a molding material during the molding process of the unit cell 10.

The first step portion 112 may include a 1a step portion 112a on which a part of the tab portion 11 wrapped by the molding material is seated and a 1b step portion 112b on which another part of the tab portion 11 is seated so as not to be exposed to the molding material.

The 1a step portion 112a may have a depression depth less than the depression depth of the first receiving space S1. In this case, the 1a step portion 112a may be formed so as to correspond to the height and position of the tab portion 11.

In addition, the 1a step portion 112a may have a width less than the length of the first receiving space S1 in the overall width direction. For example, the width of the 1a step portion 112a may be set such that the tab portion 11 of the unit cell 10 is received in the 1a step portion and such that the 1a step portion has an area capable of being filled with the molding material so as to wrap around a part of the tab portion 11 with the molding material. However, the width of the 1a step portion 112a may be less than the length of the unit cell 10 in the overall width direction.

The 1a step portion 112a may have an extension length less than the extension length of the 1a side wall member 111a in the overall length direction.

The 1b step portion 112b may extend from the 1a step portion 112a in the overall length direction such that a part of the tab portion 12 that is not wrapped by the molding material is seated thereon. In this case, the 1b step portion 112b may have a depression depth corresponding to half the thickness of the tab portion 12 and a width corresponding to the width of the tab portion 12 such that the molding material is not injected in the state in which the tab portion 12 is received.

The first step portion 112 may be formed on each of the pair of 1a side wall members 111a; however, the present invention is not limited thereto, and two first step portions 112 may be formed on any one of the pair of 1a side wall members 111a.

The at least one injection hole 113 may be formed in the first mold 110 having the first receiving space S1. For example, one injection hole 113 may be formed at the center of the first mold. As another example, a plurality of injection holes 113 may be formed at the center of the first mold and along the edge of the first mold. As shown in the figures, a total of six injection holes 113 may be formed along the edge of the first mold; however, the present invention is not necessarily limited thereto.

The injection hole 113 is configured to allow an external space and the first receiving space S1 to communicate with each other therethrough, and the molding material may be injected into the first receiving space S1 through the injection hole.

The second mold 120 may include a second receiving space S2 configured to receive at least one unit cell 10, a second side wall portion 121, a second step portion 122, and at least one exhaust hole 123.

The second receiving space S2 may be a space portion formed by a central portion of the second mold 120 being recessed inward (in a 6 o'clock direction in FIG. 3). In this case, the second receiving space S2 may have a depression depth corresponding to at least half the height of the unit cell 10 such that the at least one unit cell 10 can be received in the second receiving space. For example, the second receiving space S2 may be recessed so as to have a depth equal to or greater than the height of the tab portion 11 from an upper surface of the unit cell 10.

When the second mold 120 is seated on the first mold 110, the second receiving space S2 may communicate with the first receiving space S1 to form a receiving space S. In this case, the unit cell 10 may be received in the receiving space S.

The second side wall portion 121 may include a pair of 2a side wall members 121a provided on both sides of the unit cell 10 received in the second receiving space S2 in the overall length direction (X-axis direction in FIG. 3) and a pair of 2b side wall members 121b provided on both sides of the unit cell 10 in the overall width direction (Z-axis direction in FIG. 3), and may surround the second receiving space S2.

In this case, the second step portion 122 may be recessed inward from one surface of the 2a side wall member 121a by a predetermined depth. The second step portion 122 may extend from the second receiving space S2 so as to allow the tab portion 11 of the unit cell 10 received in the second receiving space S2 to be received therein.

In addition, the second step portion 122 may be configured to allow the tab portion 11 of the unit cell 10 received in the second receiving space S2 to be received therein. In this case, the second step portion 122 may be a space for molding the tab portion 11 such that a part of the tab portion 11 is wrapped by a molding material during the molding process of the unit cell 10.

The second step portion 122 may include a 2a step portion 122a on which a part of the tab portion 11 wrapped by the molding material is seated and a 2b step portion 122b on which another part of the tab portion 11 is seated so as not to be exposed to the molding material.

The 2a step portion 122a may have a depression depth less than the depression depth of the second receiving space S2. In this case, the 2a step portion 122a may be formed so as to correspond to the height and position of the tab portion 11.

In addition, the 2a step portion 122a may have a width less than the length of the second receiving space S2 in the overall width direction. For example, the width of the 2a step portion 122a may be set such that the tab portion 11 of the unit cell 10 is received in the 2a step portion and such that the 2a step portion has an area capable of being filled with the molding material so as to wrap around a part of the tab portion 11 with the molding material. However, the width of the 2a step portion 122a may be less than the length of the unit cell 10 in the overall width direction.

The 2a step portion 122a may have an extension length less than the extension length of the 2a side wall member 121a in the overall length direction.

The 2b step portion 122b may extend from the 2a step portion 122a in the overall length direction such that a part of the tab portion 12 that is not wrapped by the molding material is seated thereon. In this case, the 2b step portion 122b may have a depression depth corresponding to half the thickness of the tab portion 12 and a width corresponding to the width of the tab portion 12 such that the molding material is not injected in the state in which the tab portion 12 is received.

The second step portion 122 may be configured such that, when the second mold 120 is seated on the first mold 110, the 2a step portion 122a and the 1a step portion 112a communicate with each other, allowing the molding material to wrap around a part of the tab portion 11 received in the space therebetween, and the 2b step portion 122b and the 1b step portion 112a communicate with each other, preventing another part of the tab portion 11 received in the space therebetween from being exposed to the molding material.

Furthermore, the 2b step portion 122b and the 1b step portion 112a may extend to an end of the 2a side wall member 121a and an end of the 1a side wall member 111a, respectively, allowing a part of the tab portion 11 to be exposed to the outside.

The second step portion 122 may be formed on each of the pair of 2a side wall members 121a; however, the present invention is not limited thereto, and two first step portions 112 may be formed on any one of the pair of 2a side wall members 121a.

The at least one exhaust hole 123 may be formed in the second mold 120 having the second receiving space S2. For example, one exhaust hole 123 may be formed at the center of the second mold. As another example, a plurality of exhaust holes 123 may be formed at the center of the second mold and along the edge of the second mold. As shown in the figures, a total of six exhaust holes 123 may be formed along the edge of the second mold; however, the present invention is not necessarily limited thereto.

The exhaust hole 123 is configured to allow an external space and the second receiving space S2 to communicate with each other therethrough, and the air in the receiving space S may be discharged through the exhaust hole when the molding material is injected into the receiving space S.

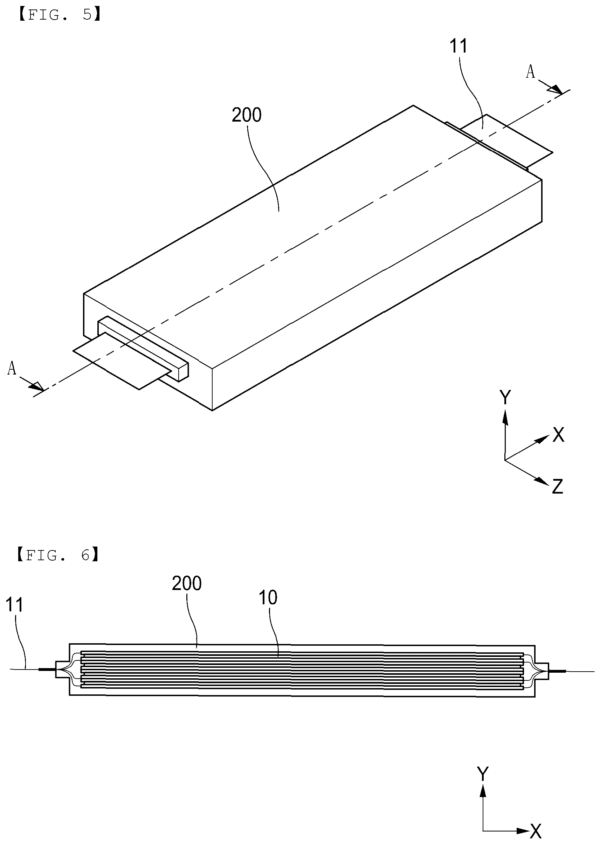

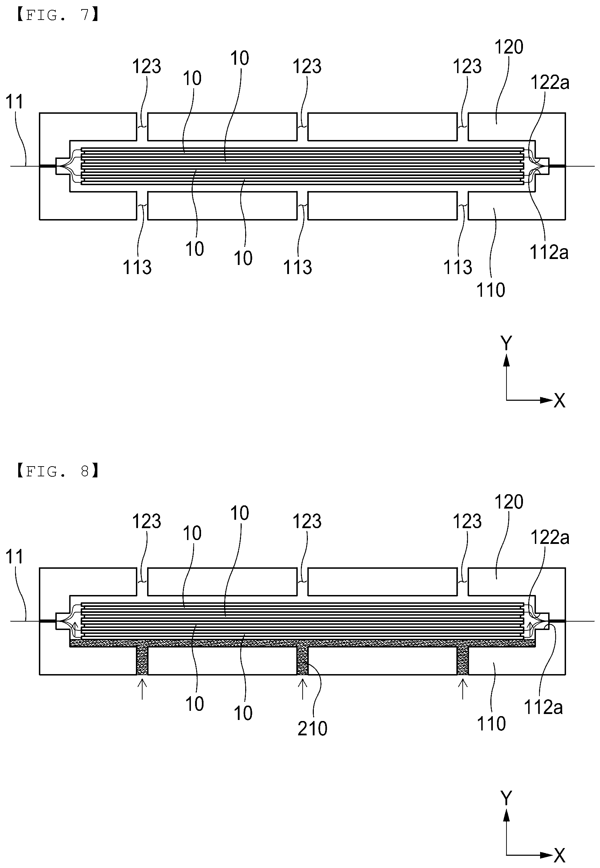

FIG. 5 is a perspective view illustrating an all-solid-state secondary battery manufactured by an all-solid-state secondary battery manufacturing method according to the present invention, and FIG. 6 is a sectional view taken along line A-A of FIG. 5. In addition, FIG. 7 is a sectional view illustrating the state in which a unit cell is received in a receiving space of the mold for manufacturing secondary batteries as an all-solid-state secondary battery manufacturing method according to a first embodiment of the present invention, and FIG. 8 is a sectional view illustrating that a first molding material is injected into the receiving space through an injection hole of the mold for manufacturing secondary batteries shown in FIG. 7.

Referring to FIGs. 1 to 8, the all-solid-state secondary battery manufacturing method according to the first embodiment of the present invention using the mold 100 for manufacturing secondary batteries includes (S1) a step of receiving at least one unit cell 10 in the first receiving space S1, (S2) a step of seating the second mold 120 on the first mold 110, (S3) a step of injecting a first molding material 210 in a liquid state through the injection hole 113, and (S4) a step of thermally curing the first molding material 210.

The unit cell received in the first receiving space S1 may be configured such that a negative electrode, a solid electrolyte, and a positive electrode are sequentially stacked. In this case, the positive electrode may have a length less than the length of the negative electrode.

The positive electrode includes a positive electrode current collector and a positive electrode active material applied to each of an upper surface and a lower surface of the positive electrode current collector. The positive electrode active material may be mixed with a conductive agent and a binder, and a filler is further added as needed.

In general, the positive electrode current collector may have a thickness of 3 to 500 µm. The positive electrode current collector is not particularly restricted as long as the positive electrode current collector exhibits high conductivity while the positive electrode current collector does not induce any chemical change in a battery to which the positive electrode current collector is applied. For example, the positive electrode current collector may be made of stainless steel, aluminum, nickel, titanium, or sintered carbon. Alternatively, the positive electrode current collector may be made of aluminum or stainless steel, the surface of which is treated with carbon, nickel, titanium, or silver. In addition, the positive electrode current collector may have a micro-scale uneven pattern formed on the surface thereof so as to increase adhesion of the positive electrode active material, or may be configured in any of various forms, such as a film, a sheet, a foil, a net, a porous body, a foam body, and a non-woven fabric body.

A layered compound, such as lithium cobalt oxide (LiCoO₂) or lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; lithium copper oxide (Li₂CuO₂); a vanadium oxide, such as LiV₃O₈, V₂O₅, or Cu₂V₂O₇; a Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a part of Li in the chemical formula is replaced by alkaline earth metal ions; a disulfide compound; or Fe₂(MoO₄)₃ may be used as the positive electrode active material; however, the present invention is not limited thereto.

The negative electrode includes a negative electrode current collector and a negative electrode active material applied to each of an upper surface and a lower surface of the negative electrode current collector. The negative electrode active material may be further mixed with a conductive agent and a binder, and the negative electrode current collector may be coated with the mixture.

The negative electrode current collector is generally manufactured so as to have a thickness of 3 to 500 µm. The negative electrode current collector is not particularly restricted as long as the negative electrode current collector exhibits high conductivity while the negative electrode current collector does not induce any chemical change in a battery to which the negative electrode current collector is applied. For example, the negative electrode current collector may be made of copper, stainless steel, aluminum, nickel, titanium, or sintered carbon. Alternatively, the negative electrode current collector may be made of copper or stainless steel, the surface of which is treated with carbon, nickel, titanium, or silver, or an aluminum-cadmium alloy. Furthermore, in the same manner as the positive electrode current collector, the negative electrode current collector may have a micro-scale uneven pattern formed on the surface thereof in order to increase adhesion of the negative electrode active material, or may be configured in any of various forms, such as a film, a sheet, a foil, a net, a porous body, a foam body, and a non-woven fabric body.

Meanwhile, each of the negative electrode current collector and the positive electrode current collector includes a part to which a slurry mixture including the active material is applied and an uncoated portion, which is a part to which no slurry mixture is applied, wherein the uncoated portion is cut to form an electrode tab, or a separate conductive member is connected to the uncoated portion by ultrasonic welding to form an electrode tab, and electrode tabs are gathered to form a tab bundle.

Furthermore, in step (S1), when the at least one unit cell 10 is received in the first receiving space S1, a part of the tab portion 11 of at least one unit cell 10 may be received in the space formed by the first step portion 112.

At this time, a part of the tab portion 11 to be wrapped by the molding material may be seated on the 1a step portion 112a, and another part of the tab portion not to be exposed from the molding material may be seated on the 1b step portion 112b or received in the space formed by the first step portion 112 so as to be exposed to the outside.

In step (S2), the second mold 120 may be seated on the first mold 110 such that one surface of the second mold having the second receiving space S2 formed therein faces the first receiving space S1. Accordingly, the at least one unit cell 10 may be received in the receiving space S formed by the first receiving space S1 and the second receiving space S2.

Furthermore, in step (S3), the first molding material 210 that is injected through the at least one injection hole 113 may be an uncured resin in a liquid state. The first molding material 210 may be a thermosetting resin; more specifically, the first molding material 210 may be an epoxy molding compound (EMC) composed of epoxy, phenol, a filler (e.g., silica and carbon black), a flame retardant, etc. However, the first molding material is not particularly restricted as long as the first molding material is a pressure-resistant material that does not undergo shape deformation during isostatic pressing after curing.

Also, in step (S3), the first molding material 210 may be injected into the receiving space S at a predetermined pressure through the at least one injection hole 113. At this time, the at least one unit cell 10 seated on the first mold 100 may temporarily float from a bottom surface of the first mold 100 due to the predetermined pressure. The first molding material 210 may fill the receiving space S through the space created during such floating. Here, it is desirable for a plurality of injection holes 113 to be formed in the first mold 100 such that the at least one unit cell 10 can float while maintaining a horizontal state.

Furthermore, in step (S3), when the first mold 100 is injected through the at least one injection hole 113, air present in the receiving space S may be discharged through the exhaust hole 123 formed in the second mold 120.

The first molding material 210 injected in step (S3) may be thermally cured to wrap around the outer circumferential surface of the at least one unit cell 10 and a part of the tab portion 11 in step (S4). At this time, the first molding material 210 may fill even the space that may occur around the edge of the unit cell 10, enabling the upper surface, the lower surface, and the side surfaces of the unit cell 10 to have a planar shape.

In addition, since first molding material 210 is cured so as to wrap around a part of the tab portion 11, it is possible to prevent penetration of moisture through the tab portion 11 and to more stably protect the tab portion 11.

After step (S4), a step of isostatic pressing an all-solid-state secondary battery molded by the first molding material 210 may be further performed. At this time, since the outer circumferential surface of the unit cell 10 is wrapped by the cured molding material 200 and each surface has a planar shape, bending or breakage of the unit cell may be minimized even during high-pressure isostatic pressing.

Meanwhile, isostatic pressing may be performed using a warm isostatic pressing (WIP) method. For example, warm isostatic pressing (WIP) may be performed at a temperature of 45°C to 100°C to ensure good interface contact between electrodes through molding of the solid electrolyte while maintaining the electrode constituent materials within an appropriate temperature range within which the electrode constituent materials are thermally stable.

For example, isostatic pressing may be performed at a pressing pressure of 4,000 bar to 7,000 bar, and preferably at a pressing pressure of about 5,000 bar.

Isostatic pressing performed after step (S4) is not limited thereto, and may be performed using a hot isostatic pressing (HIP) method or a cold isostatic pressing (CIP) method.

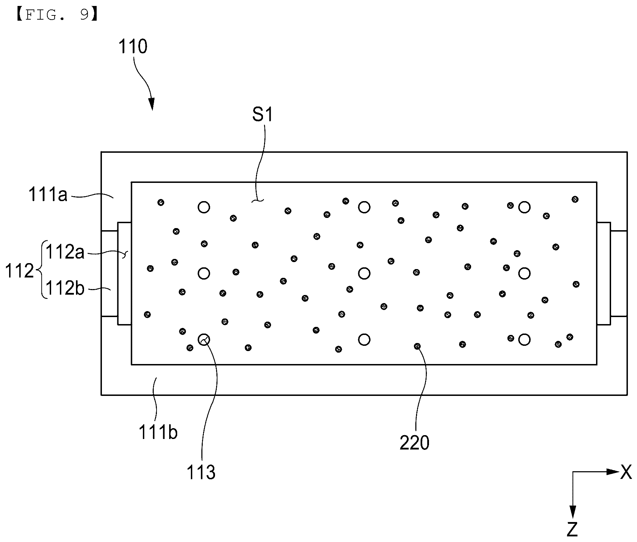

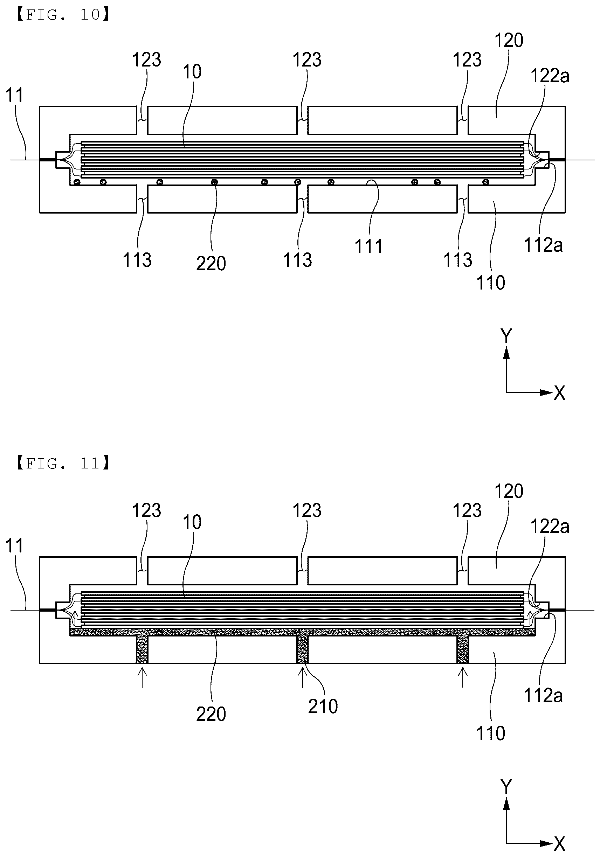

FIG. 9 is a plan view illustrating the state in which a second molding material is placed on the first mold constituting the mold for manufacturing secondary batteries, when viewed from above, as an all-solid-state secondary battery manufacturing method according to a second embodiment of the present invention, and FIG. 10 is a sectional view illustrating the state in which the second molding material and a unit cell are received as the all-solid-state secondary battery manufacturing method according to the second embodiment of the present invention. In addition, FIG. 11 is a sectional view illustrating that a first molding material is injected into the receiving space through the injection hole of the mold for manufacturing secondary batteries shown in FIG. 10.

Referring to FIGs. 1 to 6 and 9 to 11, the all-solid-state secondary battery manufacturing method according to the second embodiment of the present invention using the mold 100 for manufacturing secondary batteries includes (S1) a step of receiving at least one unit cell 10 in the first receiving space S1, (S2) a step of seating the second mold 120 on the first mold 110, (S3) a step of injecting a first molding material 210 in a liquid state through the injection hole 113, (S4) a step of thermally curing the first molding material 210, and a step of isostatic pressing an all-solid-state secondary battery molded by the first molding material 210 after step (S4), in the same manner as the all-solid-state secondary battery manufacturing method according to the first embodiment of the present invention.

However, in the second embodiment, a step of placing a second molding material 220 in the first receiving space S1 prior to step (S1) is further included, unlike the first embodiment. At this time, the second molding material 220 may be provided in plural as particles. The plurality of particles is scattered in the first receiving space S1 to provide a passageway for the first molding material 210 to move and to assist the at least one unit cell 10 seated on the second molding material 220 to be placed horizontally.

The second molding material 220 may be the same thermosetting resin as the first molding material 210 so as to prevent layer separation. For example, if the first molding material 210 is EMC, the second molding material 220 may also be EMC.

Furthermore, it is desirable for the second molding material 220 to be the same material as the first molding material 210 while having a semi-cured state so as to prevent layer separation. Here, the semi-cured state refers to the state in which, for example, a thermosetting resin is partially cured with partial progress of the chemical reaction, but is not fully cured.

In addition, the shape of each particle of the second molding material 220 may be spherical, and each particle of the second molding material may have a thickness corresponding to the difference between the depression depth of the first receiving space S1 and the height of the tab portion 11 of the at least one unit cell 10. In other words, the second molding material 220 may be provided as a plurality of particles such that, when the second molding material is placed in the first receiving space S1 and the at least one unit cell 10 is seated thereon, the tab portion 11 has a thickness that can be seated on the first step portion 112.

Particularly, when each particle of the second molding material 220 is spherical, the first molding material 210 in a liquid or slurry state may move more smoothly.

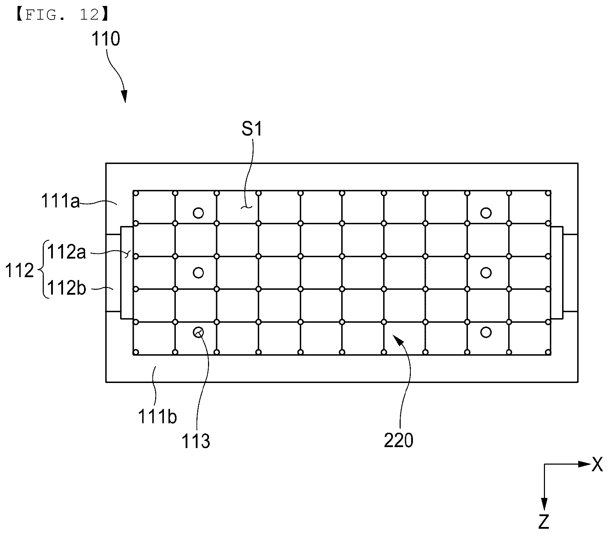

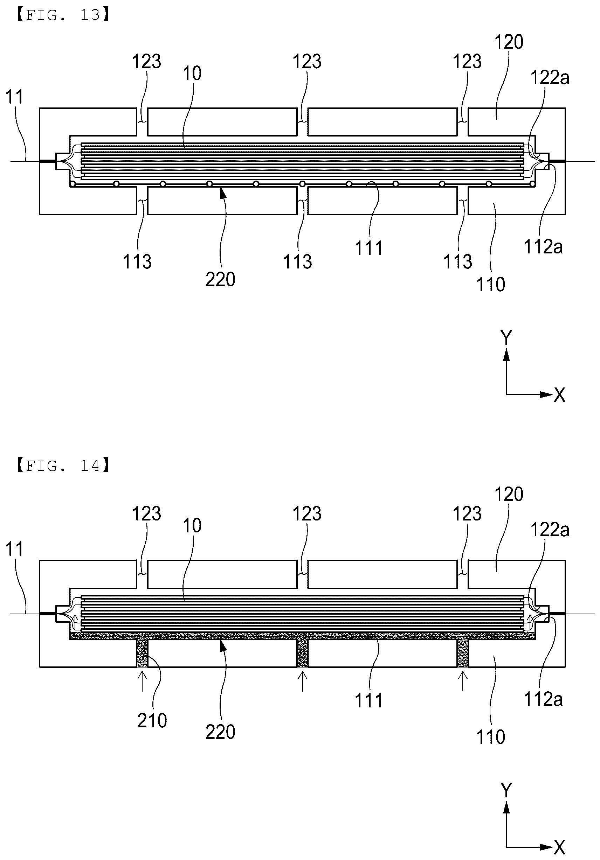

FIG. 12 is a plan view illustrating the state in which a second molding material is placed on the first mold constituting the mold for manufacturing secondary batteries, when viewed from above, as an all-solid-state secondary battery manufacturing method according to a third embodiment of the present invention, and FIG. 13 is a sectional view illustrating the state in which the second molding material and a unit cell are received as the all-solid-state secondary battery manufacturing method according to the third embodiment of the present invention. In addition, FIG. 14 is a sectional view illustrating that a first molding material is injected into the receiving space through the injection hole of the mold for manufacturing secondary batteries shown in FIG. 13.

Referring to FIGs. 1 to 6 and 12 to 14, the second molding material 220 may include a plurality of particles and a lattice frame having a plurality of intersections.

In this case, the second molding material 220 may be provided in a pre-fabricated state, with the particles disposed at the plurality of intersections of the lattice frame. Since the plurality of particles is disposed at various positions, a process of placing the second molding material 220 is simply performed.

The remaining configuration is identical to the all-solid-state secondary battery manufacturing method according to the second embodiment described with reference to FIGS. 1 to 6 and 9 to 12, and therefore a duplicate description thereof will be omitted.

Meanwhile, in the all-solid-state secondary battery manufacturing method according to each of the first to third embodiments described above, a plurality of stacked unit cells 10 may be received in the first receiving space S1 in step (S1).

When the plurality of stacked unit cells 10 is packaged with the molding material 200 at once and undergoes an isostatic pressing process, the unpackaging step and the main packaging step of the conventional all-solid-state secondary battery manufacturing method may be omitted.

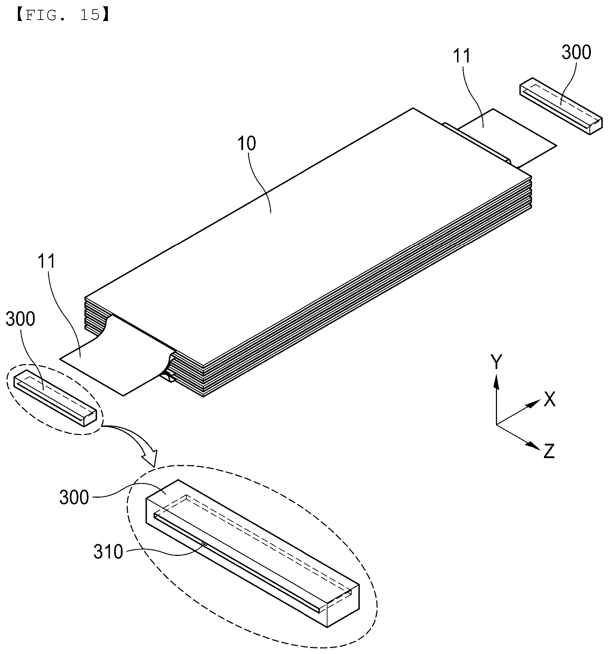

FIG. 15 is a perspective view illustrating a sealing material configured to wrap around a part of a tab portion seated on the 1b step portion of the mold for manufacturing secondary batteries according to the present invention.

In the all-solid-state secondary battery manufacturing method according to each of the first to third embodiments described above, a sealing material 300 may be disposed over a part of the tab portion 11 of the at least one unit cell 10 or each of the plurality of stacked unit cells 10 so as to wrap around the part of the tab portion 11 prior to step (S1).

The sealing material 300 may be disposed over a part of the tab portion 11 interposed between the 1b step portion 112b and the 2b step portion 122b such that the part of the tab portion 11 wrapped by the sealing material 300 is not exposed to the first molding material 210 that is injected.

In this case, the sealing material 300 may be an elastic material, preferably silicone. In addition, the sealing material 300 may have a size greater than the size of the space between the 1b step portion 112b and the 2b step portion 122b by a predetermined amount.

When the material and size of the sealing material 300 are set, as described above, the sealing material 300 is compressed in response to the gap between the 1b step portion 112b and the 2b step portion 122b, whereby the sealing material comes into tight contact with the 1b step portion 112b and the 2b step portion 122b. Consequently, it is possible to prevent the first molding material 210 that is injected from flowing into the space between the 1b step portion 112b and the 2b step portion 122b.

For example, the sealing material 300 may have a through-hole 310 formed in the center thereof so as to wrap around a part of the tab portion 11. In this case, the sealing material 300 may be removed from the tab portion 11 after step (S4) and subsequently reused during a molding process of other unit cells to be manufactured.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

10: Unit cell
11: Tab portion
100: Mold
110: First mold
111: First side wall portion
111a: 1a side wall member 111b: 1b side wall member
112: First step portion
113: Injection hole
120: Second mold
121: Second side wall portion
121a: 2a side wall member 121b: 2b side wall member
122: Second step portion
123: Exhaust hole
200: Molding material
210: First molding material
220: Second molding material
300: Sealing material 310: Through-hole
S: Receiving space
S1: First receiving space
S2: Second receiving space

## Claims

1. A mold for manufacturing secondary batteries, the mold comprising:
a first mold comprising a first side wall portion configured to surround a first receiving space formed by an inwardly recessed central portion of the first mold, a first step portion recessed inward by a predetermined depth from one surface of a 1a side wall member provided on each of both sides of the first side wall portion in an overall length direction, and at least one injection hole; and
a second mold comprising a second side wall portion configured to surround a second receiving space formed by an inwardly recessed central portion of the second mold, a second step portion recessed inward by a predetermined depth from one surface of a 2a side wall member provided on each of both sides of the second side wall portion in the overall length direction, and at least one exhaust hole.

2. The mold according to claim 1, wherein the first step portion extends from the first receiving space, and has a depression depth less than a depression depth of the first receiving space.

3. The mold according to claim 2, wherein the first step portion has a length less than a length of the first receiving space in an overall width direction.

4. The mold according to claim 3, wherein the second step portion extends from the second receiving space, and has a depression depth less than a depression depth of the second receiving space.

5. The mold according to claim 4, wherein the second step portion has a length less than a length of the second receiving space in the overall width direction.

6. The mold according to claim 2,
further comprising a plurality of injection holes, and
a plurality of exhaust holes.

7. An all-solid-state secondary battery manufacturing method using the mold according to any one of claims 1 to 6, the all-solid-state secondary battery manufacturing method comprising:
(S1) receiving at least one unit cell in the first receiving space;
(S2) seating the second mold on the first mold;
(S3) injecting a first molding material in a liquid state through the injection hole; and
(S4) thermally curing the first molding material.

8. The all-solid-state secondary battery manufacturing method according to claim 7, wherein, in step (S3), the first molding material is injected into a receiving space at a predetermined pressure through a plurality of injection holes.

9. The all-solid-state secondary battery manufacturing method according to claim 7, further comprising placing a second molding material in a semi-cured state in the first receiving space prior to step (S1).

10. The all-solid-state secondary battery manufacturing method according to claim 9, wherein the second molding material is a semi-cured particle.

11. The all-solid-state secondary battery manufacturing method according to claim 10, wherein the particle is spherical.

12. The all-solid-state secondary battery manufacturing method according to claim 11, wherein
the second molding material comprises a lattice frame having a plurality of intersections, and
the particle is disposed at each of the plurality of intersections.

13. The all-solid-state secondary battery manufacturing method according to claim 12, wherein each of the first molding material and the second molding material is a thermosetting resin.

14. The all-solid-state secondary battery manufacturing method according to claim 8, wherein, in step (S1), a plurality of stacked unit cells is received.

15. The all-solid-state secondary battery manufacturing method according to claim 8, further comprising isostatically pressing an all-solid-state secondary battery molded by the first molding material after step (S4).
